# EUROPÄISCHE PATENTANMELDUNG

(11) **EP 0 944 227 A2**
(43) Veröffentlichungstag der Anmeldung: **22.09.1999**
(21) Anmeldenummer: 99105402.4
(22) Anmeldetag: 16.03.1999
(51) Int. Cl.: H04M 7/00, H04M 15/00

(54) **Verfahren zur Darstellung von gebührenabrechnungsrelevanten Daten von Kommunikationsverbindungen**

(30) Priorität: 19.03.1998 DE 19812201
(71) Anmelder: SIEMENS AKTIENGESELLSCHAFT, 80333 München (DE)
(72) Erfinder: Neuhaus, RAlf, 44534 Lünen (DE)

(57) **Zusammenfassung**

In einer Datenverarbeitungseinrichtung (DV-L) werden die bei Kommunikationsverbindungen zu erfassenden gebührenrechnungsrelevanten Daten einem Empfangsmodul (EM) zugeführt. Diese erstellt daraus eine Gebühren-Datensatzdatei DS. Diese Daten können von einer externen fernen Datenverarbeitungseinrichtung (DV-E) über eine Netzwerkverbindung (Internet) abgefragt werden. Hierzu ist eine netzwerkkonforme Startdatei in der Ursprungs-Datenverarbeitungseinrichtung abgelegt, in der ein Hinweis auf die ein Oberflächenmodul OM repräsentierenden Daten eingebunden sind. Diese Datei (HTML-S) wird nach einer entsprechenden Anforderung der fernen Datenverarbeitungseinrichtung übermittelt und zusammen mit dem Oberflächenmodul in den dort als Internetzugang vorhandenen Browser geladen. Über die vorhandene Benutzungsoberfläche dieses Moduls können alle notwendigen Eingaben vorgenommen werden, um das in der Ursprungs-Datenverarbeitungseinrichtung vorhandene Verarbeitungsmodul VM mit den notwendigen Eingabeparametern zu steuern. Es wird durch das Verarbeitungsmodul VM dynamisch eine netzwerk-konforme HTML-Seite erzeugt, die eine den Anforderungen entsprechende Gebührenabrechnung enthält. Diese Seite wird über die aufgebaute Datenverbindung in den Browser (BR-E) der fernen Datenverarbeitungseinrichtung (DV-E) geladen. Dem Benutzer werden die betreffenden Berichtsdaten der erstellten Berichtsdatei (HTML-B) angezeigt und er hat die Möglichkeit sich diese mit den in seiner Hardware- und Softwareumgebung üblichen Methoden auf seinem Standarddrucker auszudrucken.

Durch die erfindungsgemäße Lösung wird eine in eine homogene Netzwerkumgebung integrierte Applikation geboten, die es lokal oder über Fernverbindungen ermöglicht mit einer plattformunabhängig nutzbaren Oberfläche gebührenrechnungsrelevante Daten über Standard-Datenverbindungen abzufragen und weiterzuverarbeiten. Durch die Nutzung des HTML-Standards ergeben sich einfache Möglichkeiten zur Erzeugung graphischer Oberflächen auf unterschiedlichen Betriebssystemen.

## Beschreibung

Die Erfindung betrifft ein Verfahren zur Darstellung von im Zusammenhang mit einer gebührenpflichtigen Kommunikationsverbindung zu erfassenden gebührenrechnungsrelevanten Daten, die an einer mindestens eine Datenverarbeitungseinrichtung und wenigstens ein Fernsprechendgerät umfassenden Kommunikationsanschluß entstehen und für diese Ursprungs-Datenverarbeitungseinrichtung verfügbar sind. Diese Daten werden nach der Auswertung als gebührenabrechnungsrelevanter Verbindungsdatensatz, der unter anderem teilnehmer-, gebühren- und verbindungsbezogene Daten enthält, abgespeichert. Die jeweilige Datenverarbeitungseinrichtung weist diesbezüglich einen Speicher zur Speicherung von Programmodulen und von Daten und eine Prozessoreinrichtung zur Abarbeitung der Programmodule auf. Bei dem genannten Anschluß kann es sich um einen sogenannten multifunktionalen Anschluß handeln, über den Endgeräte der unterschiedlichsten Art Kommunikationsverbindungen aufbauen können. Diese Endgeräte unterschiedlicher Funktionalität können auch an ein Kommunikationssystem, beispielsweise an ein kleines Nebenstellenkommunikationssystem angeschlossen sein. Die gebührenrechnungsrelevanten Daten müssen in jedem Fall der vorhandenen Datenverarbeitungseinrichtung zugänglich sein. Zu allen Kommunikationsverbindungen, wie Gesprächs- und Datenverbindungen wird z. B. in dem Nebenstellenkommunikationssystem ein Verbindungsdatensatz generiert, der alle für die jeweilige Verbindung relevanten Daten enthält. Diese betreffen beispielsweise eine Datumsangabe, die Uhrzeit, die Gesprächs- bzw. Verbindungsdauer, den internen Teilnehmer, die externe Rufnummer, die Gebühren, eine Projektkennzahl, die Art der Verbindung usw. Es ist bekannt gebührenrechnungsrelevante Daten auf einem lokal an dem die Gebühren verursachenden Nebenstellenkommunikationssystem angeschlossenen Datenverarbeitungseinrichtung zu erfassen und zu verarbeiten. Sie können dann unter Nutzung verschiedener Auswerteprinzipien zur Anzeige gebracht werden. Diese Verarbeitung erfolgt in einer Weise, wie sie ausschließlich für die Oberfläche der jeweils verwendeten Datenverarbeitungseinrichtung relevant ist. Man ist also an die Plattform und an den Ort dieser Einrichtung gebunden.

Es ist die Aufgabe der Erfindung die Möglichkeiten hinsichtlich der Darstellung gebührenrechnungsrelevanter Daten zu erweitern.

Gelöst wird diese Aufgabe erfindungsgemäß durch die im kennzeichnenden Teil des Patentanspruches 1 angegebenen Merkmale. Vorteilhafte Weiterbildungen der Erfindung sind in den Unteransprüchen angegeben.

Das wesentliche der Erfindung besteht darin, daß in einer lokalen Datenverarbeitungseinrichtung die gebührenrechnungsrelevanten Daten sämtlicher durch den betreffenden Anschluß bzw. durch das Nebenstellenkommunikationssystem verursachter Gebühren durch zumindest drei diesbezüglich vorhandene Programmodule aufbereitet werden. Neben einem Empfangsmodul, das die Daten empfängt und in einer entsprechenden Datei hinterlegt ist ein Verarbeitungsmodul vorgesehen, das mit einem Oberflachenmodul in bestimmter Weise kommuniziert. Aufgrund dieser Kommunikation wird in dem aktuellen Anforderungsfall einer Darstellung dieser gebührenrechnungsrelevanten Daten ein entsprechender Bericht erstellt. Dieser wird als eine Datei abgespeichert, die in dem standardnetzwerkkonformen Format erstellt wird. Sie entspricht also einer z. B. im Internet üblichen sogenannten HTML-Seite. Das Oberflächenmodul ist gleichfalls in einer gemäß diesem Format erstellten Startdatei eingebunden. Durch die Anwendung des Internet-Standards für diese genannte Berichtsdatei und die Startdatei sind sie einer fernen Datenverarbeitungseinrichtung über das Netzwerk problemlos übermittelbar. Der Dateiinhalt kann in dieser Datenverarbeitungseinrichtung die für den Internetzugang einen sogenannten Browser enthält auf dem Display (Bildschirm) dieser Einrichtung dargestellt werden. Erfindungsgemäß ist die Einbindung des Oberflächenmoduls in der Form realisiert, daß es als ein Programmiermodul in der Startdatei referenziert ist. Das Modul ermöglicht die Nutzung unterschiedlicher Hardware- und Softwareplattformen. Ein Beispiel wäre die Ausführung als Java-Programmiermodul (Java-Applet).

Die gebührenrelevanten Daten können also in vorteilhafter Weise von berechtigten Nutzern über Standard-Schnittstellen abgefragt werden und zwar im wesentlichen unabhängig vom Standort der abfragenden Datenverarbeitungseinrichtung. Als solche können auch einfache Geräte verwendet werden, sofern sie einen Browser mit z. B. Java-Fähigkeiten bieten. Durch die Nutzung von Dateien, die im Internet-Standard (HTML-Standard) erstellt sind, ergeben sich einfache Möglichkeiten zur Erzeugung graphischer Oberflächen auf unterschiedlichen Betriebssystemen. Bei der Abfrage der gebührenbezogenen Verbindungsdaten zu einer mit einem Netzwerk-Browser und Anzeige-Display (Bildschirm) versehenen Datenverarbeitungseinrichtung werden die das Oberflachenmodul repräsentierenden Daten nach ihrer Übermittlung in eine entsprechende graphische Oberfläche umgesetzt. Nach Eingabe der Anforderungsparameter durch den jeweiligen Benutzer, die durch das Verarbeitungsmodul aufgenommen werden, wird durch dieses Modul dynamisch die entsprechende Berichtsdatei erstellt. Diese wird erfindungsgemäß über das Übertragungsnetzwerk (Internet) zur abfragenden Datenverarbeitungseinrichtung übermittelt und steht dort dem betreffenden Browser zur Verfügung, so daß durch ihn die Übersetzung in die graphische Oberfläche in Form der Darstellung dieser jeweiligen Berichtsseite erfolgt. Als weiterer Vorteil ergibt sich, daß der erzeugte Bericht aufgrund der Nutzung des HTML-Standards mit den auf der benutzten Software- und Hardware-Plattform üblichen Methoden unmittelbar aus dem Browser ausgedruckt werden kann. Durch die Anwendung dieses Internet-Standards ist außerdem der Umfang der zwischen dem Verarbeitungsmodul und dem übermittelten Oberflächenmodul zu übertragenden Daten minimal. Erfindungsgemäß erfolgt die Erfassung der gebührungsrechnungsrelevanten Daten lokal und es erfolgt die Verarbeitung durch die lokale Datenverarbeitungseinrichtung. Neben der Auswertung und Anzeige in externen entfernten Datenverarbeitungseinrichtungen kann über die gleichen vorhandenen Module und den gleichen Eingabebefehlen des Benutzers ohne zusätzlichen Aufwand diese Auswertung und Anzeige auch lokal gemäß Anspruch 7 vorgenommen werden.

Diese Möglichkeit ist immer dann gegeben, wenn die lokale Datenverarbeitungseinrichtung einen Browser enthält. üblicherweise ist ein solcher Browser vorhanden, um Internetverbindungen abzuwickeln. Es können also ohne Änderungen von Modulen über eine interne Datenübertragungsstrecke die Inhalte der Startdatei und die erstellte Berichtsdatei unmittelbar in den Browser geladen werden. Die Korrespondenz zwischen den vorhandenen Modulen bleibt unverändert erhalten.

Anhand der Zeichnungen wird im folgenden die Erfindung näher erläutert. Dabei zeigen
- FIG 1: das Schema einer Gerätekonstellation zur Darstellung gebührenrechnungsrelevanter Daten
- FIG 2: ein Beispiel für eine Startdatei, in der das Oberflächenmodul eingebunden ist
- FIG 3 und 4: Darstellungen, die im Zusammenhang mit dem Abfragen gebührenrechnungsrelevanter Daten vorgenommen werden.

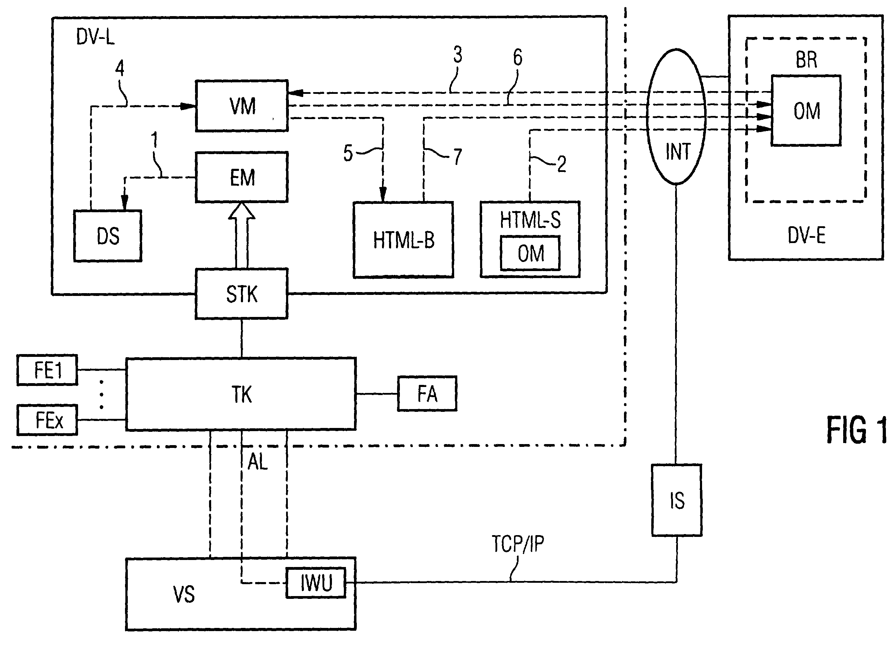

In dem Ausführungsbeispiel nach der FIG 1 ist eine Konfiguration gezeigt, bei der die lokale Datenverarbeitungseinrichtung DV-L mit einem Nebenstellenkommunikationssystem TK gekoppelt ist. An dieses System können noch weitere Endgeräte, beispielsweise Fernsprechendgeräte FE1 und FEx und ein Fax-Endgerät FA angeschlossen sein. Die Nebenstellenanlage ist über entsprechende Leitungsverbindungen mit einer Vermittlungsstelle VS verbunden. Diese Leitung kann zu der Übertragung von Gesprächsinformationen und auch von Dateninformationen dienen. Der Anschluß kann beispielsweise als ISDN-Anschluß realisiert sein. In einem solchen Fall würde dann eine Datenübermittlung in einem der B-Nutzkanäle vorgenommen werden. Eine derartige Konstellation kann beispielsweise einen Anschluß betreffen, der einem extern arbeitenden Mitarbeiter (Teleworker) einer Firma zugordnet ist. Aufgrund der sich wandelnden Strukturen von Firmen ergibt sich eine zunehmende Anzahl derartige Mitarbeiter. In diesem Zusammenhang ist es dann erwünscht, daß eine Firmenzentrale, z. B. die angefallenen Gebühren abfragen kann. Aufgrund möglicher unterschiedlicher Datenverarbeitungsinfrastrukturen zwischen der Zentrale und einer Filiale bzw. dem Standort des extern arbeitenden Mitarbeiters ist es notwendig, die Art der Verarbeitung und Auswertung unabhängig von der Datenverarbeitungstechnik der abfragenden Stelle zu machen. Eine derartige Konstellation kann beispielsweise als Teleworking-Personalcomputer realisiert sein, bei dem die durch einen PC realisierte Datenverarbeitungseinrichtung eine PC-Karte mit einer kompletten Kommunikationssystemfunktionalität enthält, die eine entsprechend ausgebildete Schnittstelle zum eigentlichen Personalcomputer hat. Zu allen geführten Gesprächsverbindungen bzw. zu allen Datenverbindungen werden Daten generiert, die für die jeweilige Verbindung relevant sind. Diese Daten werden über eine entsprechende Schnittstelle STK einem Empfangsmodul EM zugeführt. Dieses Empfangsmodul empfängt laufend die aktuellen Verbindungsdatensätze vom Nebenstellenkommunikationssystem und speichert diese Datensätze in einer entsprechenden Datei DS innerhalb der Datenverarbeitungseinrichtung (symbolisiert durch den Meldungsweg 1). Im Zusammenhang mit der vorzunehmenden Anfrage gebührenverrechnungsrelevanter Daten enthält diese Datenverarbeitungseinrichtung noch zwei weitere grundlegende Programmodule, nämlich das Verarbeitungsmodul VM und das Oberflächenmodul OM. Insbesondere das Programmodul (OM) wird in einer Programmiersprache erstellt, die eine erfindungsgemäße Nutzung auf unterschiedlichen Hardware- und Softwareplattformen ermöglicht. Es kann beispielsweise in der Programmiersprache "Java" oder mit Hilfe anderer vergleichbarer Techniken, wie z. B. der Programmiersprache "Active X" realisiert sein. Das Verarbeitungsmodul läuft im Sinne eines Server-Anteils auf der angeschlossenen Datenverarbeitungseinrichtung DV-L und liest die vom Empfangsmodul abgespeicherte Datei DS aus (Meldungsweg 4) und benutzt die darin enthaltenen Daten zur Auswertung. Es erfolgt in diesem Modul die komplette Verarbeitung der aus der Datei abgeholten Daten.

In der Datenverarbeitungseinrichtung DV-L ist eine sogenannte Startdatei HTML-S abgespeichert, in der das Oberflächenmodul OM referenziert ist. Diese Datei ist gemäß dem Netzwerk-Standard, wie beispielsweise dem Internet-Standard, erstellt. Dieses Benutzungsoberflächen-Modul liefert im Sinne des Client-Anteils die Oberfläche zur Einstellung aller Auswertungsparameter für das Verarbeitungsmodul VH und ermöglicht die Eingabe dieser Auswertungsparameter und die Darstellung der Auswertungsergebnisse. Es ist z. B. als sogenanntes "Java-Applet" realisiert, das in die HTML-Seite eingebunden ist. Des weiteren wird jeweils durch das Verarbeitungsmodul VM auf Anforderung, wie später noch beschrieben wird, eine aktuelle Berichtsdatei HTML-B erstellt. Die Erstellung dieser Datei erfolgt in gleicher Weise, wie die Erstellung der Startdatei übertragungsnetzwerkkonform, d. h. es ist z. B. der Internet-Standard HTML (Hyper Text Markup Language) zugrundegelegt.

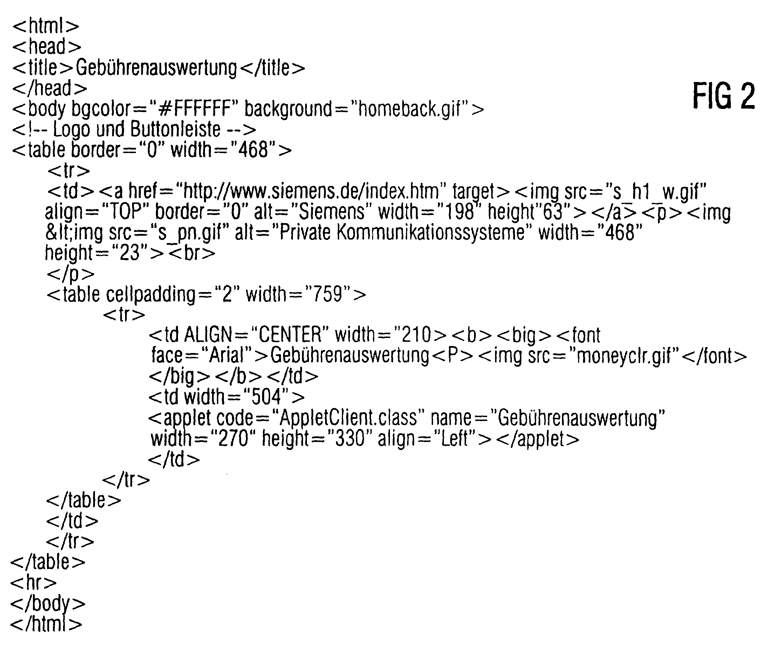

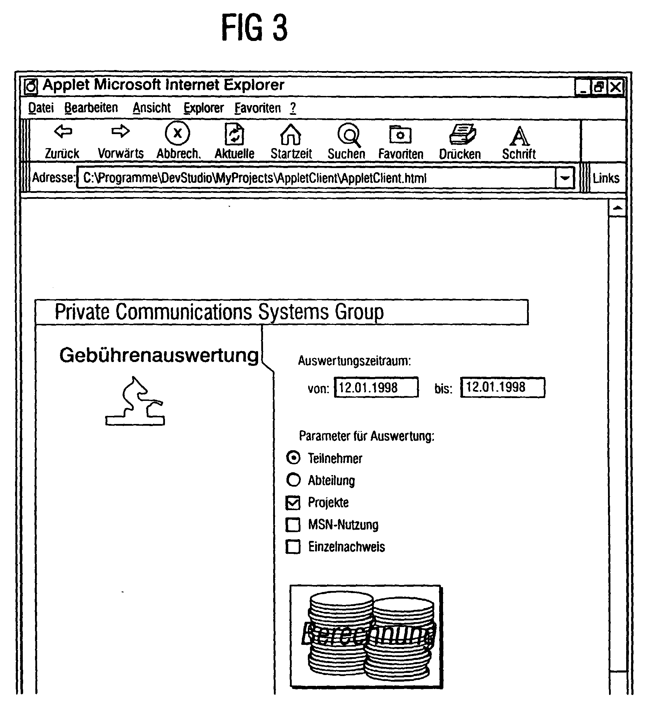

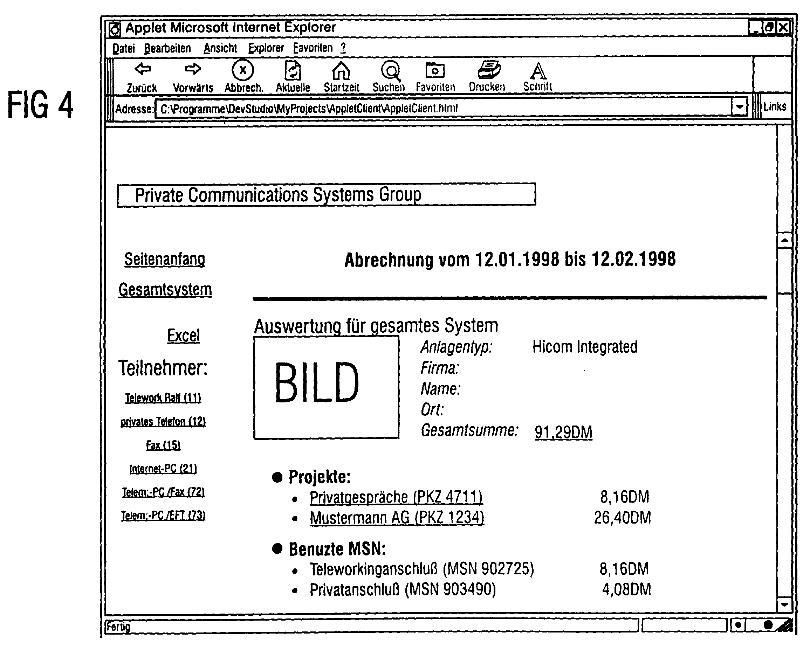

Es wird nun davon ausgegangen, daß die "Gebührendaten" durch einen örtlich entfernten Benutzer unter Einbeziehung seiner Datenverarbeitungseinrichtung DV-E abgefragt werden. Diese Datenverarbeitungseinrichtung weist den für die Internet-Nutzung sowieso vorhandenen Browser BR-E auf. Die Anfrage erfolgt innerhalb einer Internet-Verbindung über das schematisch angedeutete Netzwerk INT. Dieser Browser BR-E kann beispielsweise als "Internet-Explorer" oder als "Netscape-Navigator" realisiert sein. Durch diesen Browser wird die für die Erstellung der genannten Dateien verwendete Programmiersprache, z. B. Java oder Active X unterstützt. Durch den Benutzer wird die Anforderung zur Übermittlung der "Gebührendaten" eingegeben. Die gewünschte Datenverarbeitungseinrichtung DV-L wird über die zugeordnete sogenannte IP-Adresse angesprochen und der Verbindungsaufbau dahin erfolgt automatisch durch das zugrundeliegende Betriebssystem. In der FIG sind Meldungs- bzw. Informationsflüsse schematisch durch die gestrichelten Linien 1 bis 7 angedeutet. Die genannte Anforderung ist durch die Meldungslinie 3 symbolisiert. Die eigentliche Verbindung ist im Ausführungsbeispiel eine Internet-Verbindung, die über einen Internet-Server IS und über den Internet-Einwahlpunkt IWU einer Vermittlungsstelle VS bis zu einem multifunktionalen Anschluß bzw. im Ausführungsbeispiel bis zu dem Nebenstellenkommunikationssystem TK verläuft. Eine Abfrage der "Gebührendaten" kann nur durch einen berechtigten Benutzer vorgenommen werden. Hierzu werden die bekannten Schutzkonzepte, wie z. B. die Anforderung eines Paßwortes herangezogen und es erfolgt ggf. zusätzlich die Nutzung der normalen sogenannten "Firewall"-Systeme. Von der fernen Datenverarbeitungseinrichtung DV-E wird die Startdatei HTML-S in den Browser BR-E geladen. Gleichzeitig erfolgt die Übermittlung der das Oberflächenmodul OM repräsentierenden Daten. Wie bereits erwähnt ist dieses Oberflächenmodul als "Java-Applet" realisiert. Der Browser liest die die Startdatei betreffende HTML-Seite ein und lädt den notwendigen Java-Code über die Datenverbindung. Die Übersetzung des enthaltenen Java-Applets in die endgültige umgebungsspezifische Maschinensprache erfolgt durch eine sogenannte "virtuelle Java-Maschine" oder einen "Just-in-Time-Compiler" innerhalb des anzeigenden Browsers. Das Applet wird also automatisch in die auf der verwendeten Plattform erforderlichen Maschinensprache übersetzt. Anstelle der im Beispiel gewählten Internet-Verbindung kann auch eine andere Standard-Datenverbindung, wie z. B. eine Intranet-Verbindung oder eine Remote-Access-Verbindung genutzt werden. Die Kommunikation erfolgt im Internet-Protokoll TCP/IP (Transmission Control Protocol). Dies ist das im Internet und im lokalen Rechnernetz genutzte Datenprotokoll für paketvermittelte Daten. Das Benutzungsoberflächenmodul, das als Modul OM in der Datenverarbeitungseinrichtung DV-E nach seiner Übermittlung zur Verfügung steht, kommuniziert mit dem Verarbeitungsmodul. Durch die in der Datenverarbeitungseinrichtung DV-E nach der Übermittlung vorhandenen Benutzungsoberfläche kann der Benutzer die notwendigen Eingaben vornehmen. In der FIG 2 ist ein Beispiel für die HTML-Startdatei gezeigt, in der das Oberflächenmodul eingebunden ist. Diese Einbindung ist durch die "fette Schreibweise" herausgehoben. Nach der Übermittlung des Benutzungsoberflächenmoduls wird auf dem Bildschirm der abfragenden Datenverarbeitungseinrichtung eine Darstellung gemäß der FIG 3 gezeigt. Der jeweilige Benutzer kann über die nun vorhandene Benutzungsoberfläche des Moduls OM alle notwendigen Eingaben vornehmen, um damit das Verarbeitungsmodul VM mit den erforderlichen Eingabeparametern zu steuern. Aufgrund dieser aus der Startdatei HTML-S erzeugten Oberfläche kann die Einstellung für den gewünschten Auswertungszeitraum festgelegt werden. Außerdem kann z. B. eine Auswertung nach Teilnehmer, nach Abteilungen, vorgenommen werden. Es kann auch festgelegt werden, ob eine Berücksichtigung bestimmter Projekte erfolgen soll. Außerdem könnte die Nutzung bestimmter Leitungsanschlüsse nach dienstlicher Nutzung bzw. privater Nutzung unterschieden werden (MSN-Nutzung). Nachdem der Benutzer die ihn interessierenden Optionen ausgewählt hat, kann das Verarbeitungsmodul VM in der lokalen Datenverarbeitungseinrichtung DV-L z. B. mit einem Klick auf den Button "Berechnung" gestartet werden. Wie durch den Meldungsweg 3 symbolisiert ist, wird demnach eine entsprechende Meldung mit den notwendigen Parametern an das Verarbeitungsmodul übermittelt. Das Verarbeitungsmodul VM liest gemäß der Anforderung die aktuell vorhandenen Verbindungsdatensätze aus der vom Empfangsmodul EM erzeugten Datei DS. Dies ist durch den Meldungsweg 4 symbolisiert. Daraus wird vom Verarbeitungsmodul VM dynamisch eine neue HTML-Seite erzeugt, die eine den Anforderungen entsprechende Gebührenabrechnung im HTML-Form enthält (Meldungsweg 5). Es sind individuelle Erweiterungen möglich, wie z. B. die Anzeige einer Bilddarstellung zu jedem im Datensatz vorhandenen Teilnehmer, die Darstellung eines Abteilungssymboles oder ähnliches. Nach Fertigstellung dieser HTML-Seite in Form der Berichtsdatei HTML-B sendet das Verarbeitungsmodul, symbolisiert durch den Meldungsweg 6, ein entsprechendes Informationselement an das in der abfragenden Datenverarbeitungseinrichtung verfügbare Oberflächenmodul OM. Daraufhin lädt dieses Oberflächenmodul die fertiggestellte Berichtsdatei von der lokalen Datenverarbeitungseinrichtung DV-L in den Browser der abfragenden Datenverarbeitungseinrichtung DV-E. Dies ist durch den Meldungsweg 7 angedeutet. Der Inhalt der Berichtsdatei wird dem Benutzer z. B. entsprechend der Darstellung der FIG 4 angezeigt. Innerhalb dieser angezeigten HTML-Seite hat der Benutzer die Möglichkeit mit Hilfe der enthaltenen Hyperlinks zu navigieren und gezielt einzelne Stellen anzuspringen. Er hat auch die Möglichkeit in weitere HTML-Seiten zu verzweigen. Dies kann beispielsweise zur Administration von Parametern oder für den Aufruf von Dokumenten erfolgen. Letzteres kann z. B. ein vorgefertigtes Winword-Dokument sein, in das nur noch Daten eingetragen werden und das direkt aus dem Browser gedruckt oder gefaxt werden kann. In dem Beispiel gemäß der FIG 4 werden für ein Projekt Privatgespräche und dienstliche Gespräche unterschieden und es werden die z. B. durch den Teleworking-Anschluß und dem Privatanschluß verursachten Gebühren aufgelistet. Grundsätzlich kann der jeweils erzeugte Bericht mit den auf der in der abfragenden Datenverarbeitungseinrichtung benutzten Software- und Hardwareplattform üblichen Methoden direkt aus dem Browser ausgedruckt werden. Die Erstellung der Berichtsdatei als HTML-Seite hat grundsätzlich den Vorteil, daß die im HTML-Standard definierten Gestaltungsmöglichkeiten ohne weiteren Aufwand bei der abfragenden und anzeigenden Datenverarbeitungseinrichtung DV-E genutzt werden können. Zu diesen Gestaltungsmöglichkeiten gehören beispielsweise die Aufnahme von Tabellen, Überschriften, Aufzählungen, Graphiken, animierte Graphiken, Hintergrundbilder und Hyperlinks. Durch die Plattformunabhängigkeit der abfragenden und anzeigenden Datenverarbeitungsgeräte können solche der unterschiedlichsten Art verwendet werden. Beispiele sind Personalcomputer, Workstations,internetfähige Fernsehgeräte und sogenannte Personal Digital Systems. Letzeres sind kleine Handcomputer, die ein Display mit graphischer Oberfläche aufweisen. Solche Gerate werden zukünftig auch eine Browser-Funktionalität aufweisen und können demnach auch in dem geschilderten Zusammenhang verwendet werden.

Unter der Voraussetzung, daß, wie z. B. für den Internet-Zugang auch notwendig, auf der lokalen Datenverarbeitungseinrichtung DV-L ein Browser vorhanden ist, kann eine Gebührenabrechnung aufgrund der für eine externe Abfrage über das Internet in dieser Datenverarbeitungseinrichtung erstellten HTML-Dateien (Berichtsdatei, Startdatei) auch lokal dargestellt werden. Diese Darstellung der gebührenrechnungsrelevanten Verbindungsdaten kann ohne Änderungen von vorhandenen Modulen mit den gleichen Eingabebefehlen des Benutzers erfolgen.

## Patentansprüche

1. Verfahren zur Darstellung von im Zusammenhang mit einer gebührenpflichtigen Kommunikationsverbindung zu erfassenden gebührenrechnungsrelevanten Daten, die an einem mindestens eine Datenverarbeitungseinrichtung und wenigstens ein Fernsprechendgerät umfassenden Kommunikationsanschluß entstehen und für diese Ursprungs-Datenverarbeitungseinrichtung verfügbar sind und nach der Auswertung als gebührenabrechnungsrelevanter Verbindungsdatensatz, -der teilnehmer-, gebühren- und verbindungsbezogene Daten enthält- abgespeichert wird, wobei die Datenverarbeitungseinrichtung (DV-L) einen Speicher zur Speicherung von Programmodulen und von Daten und eine Prozessoreinrichtung zur Abarbeitung der Programmodule aufweist, **dadurch gekennzeichnet,** daß in dieser Ursprungsdatenverarbeitungseinrichtung die ihr zur Verfügung stehenden Daten ein Empfangsmodul (EM) aufnimmt und jeweils als entsprechenden gebührenabrechnungsrelevanten Verbindungsdatensatz in einer Datei (DS) hinterlegt, daß diese Daten einer anderen örtlich entfernt angeordneten Datenverarbeitungseinrichtung (DV-E) zum Zwecke der visuell erfaßbaren Darstellung (Bildschirmdarstellung, gedrucktes Protokoll) über eine aufgebaute Übertragungsnetzwerk-Verbindung, vorzugsweise Internet-Verbindung, abfragbar sind, daß zu diesem Zweck in der Ursprungs-Datenverarbeitungseinrichtung (DV-L) Dateien abgespeichert sind, deren Inhalt unmittelbar in dem übertragungsnetzwerkkonformen Format strukturiert sind (Internet-Befehlssprache) und als entsprechend kodierte Seite (HTML-Seite) übertragbar sind, daß hierzu in der Ursprungsdatenverarbeitungseinrichtung (DV-L) Programmodule vorhanden sind, die neben dem genannten Empfangsmodul (EM) ferner ein Verarbeitungsmodul (VM) umfassen, dessen Ausführung aufgrund eines entsprechenden von ihm verarbeiteten Eingabebefehls des Benutzers die Aufnahme und Verarbeitung des Dateiinhalts der Verbindungsdatensatz-Datei (DS) und die Speicherung des jeweiligen Verarbeitungsergebnisses in einer dem Übertragungsnetzwerkstandard (Internet-Standard) entsprechenden Formats in einer Berichtsdatei (HTML-B) bewirkt,
die weiterhin ein Benutzungsoberflächenmodul (OM) umfassen, das in einer entsprechend dem Format des Übertragungsnetzwerkstandards erstellten Startdatei (HTML-S) eingebunden ist und dessen Ausführung die Korrespondenz mit dem genannten Verarbeitungsmodul (VM) zur Eingabe aller erforderlichen Auswertungsparameter und die Darstellung der Auswertungsergebnisse aufgrund der hierzu präsentierten Oberfläche bewirkt.

2. Verfahen nach Anspruch 1, **dadurch gekennzeichnet,** daß die Ursprungs-Datenverarbeitungseinrichtung (DV-L) und die übrigen dem jeweiligen Benutzer zugeordneten Endgeräte, wie Fernsprechendgeräte, einem Nebenstellenkommunikationssystem (TKS) zugehörig sind, daß die bei gebührenverursachenden Verbindungen (Gesprächsverbindungen, Datenverbindung) sämtlicher Endgeräte entstehenden gebührenabrechnungsrelevanten Verbindungsdaten über eine entsprechende Schnittstelle (STK) dem Empfangsmodul (EM) der Ursprungsdatenverarbeitungseinrichtung zugeführt werden.

3. Verfahren nach Anspruch 1, **dadurch gekennzeichnet,** daß die Einbindung des Oberflächenmoduls (OM) in der Form realisiert ist, daß es als Java-Programmiermodul (Java-Applet) in der im Sinne einer HTML-Seite erstellten und in der Ursprungsdatenverarbeitungseinrichtung (DV-L) abgespeicherten Startdatei (HTML-S) referenziert ist.

4. Verfahren nach Anspruch 1 oder 3, **dadurch gekennzeichnet,** daß die Abfrage der gebührenbezogenen Verbindungsdaten durch den Benutzer einer externen Datenverarbeitungseinrichtung (DV-E) über eine Netzwerkverbindung (INT), vorzugsweise über eine Internet-Verbindung erfolgt, daß nach einer entsprechenden Anforderungseingabe über die aufgebaute Datenverbindung die Daten der Startdatei (HTML-S) einschließlich des darin eingebundenen Oberflächenmoduls zu der betreffenden Datenverarbeitungseinrichtung (DV-E) übertragen wird, daß diese mit einem Netzwerk-Browser und Anzeigedisplay (Bildschirm) versehene Datenverarbeitungseinrichtung die Daten des Oberflächenmoduls in eine entsprechende graphische Oberfläche umsetzt und daß nach Eingabe der Anforderungsparameter durch den Benutzer, die durch das Verarbeitungsmodul (VM) der Ursprungsdatenverarbeitungseinrichtung aufgenommen werden, dieses Verarbeitungsmodul dynamisch die entsprechende Berichtsdatei (HTML-B) erstellt, die über das Übertragungsnetzwerk zur abfragenden Datenverarbeitungseinrichtung (DV-E) übermittelt wird und dort dem betreffenden Browser zur Verfügung steht, so daß durch ihn die Übersetzung in die graphische Oberfläche in Form der Darstellung der Berichtsseite erfolgt.

5. Verfahren nach Anspruch 4, **dadurch gekennzeichnet,** daß der in der Datenverarbeitungseinrichtung (DV-E) vorhandene Browser für die eine Nutzung unterschiedlicher Hardware- und Software-Plattformen ermöglichende Programmiersprache, in der die Programmodule erstellt sind, ablauffähig ist, so daß unabhängig von der speziellen Ausgestaltung der jeweiligen Datenverarbeitungseinrichtung die Darstellung der gebührenabrechnungsrelevanten Verbindungsdaten erfolgt.

6. Verfahren nach einem der vorhergehenden Ansprüche, **dadurch gekennzeichnet,** daß bei der Anforderung zur Darstellung der in der Ursprungsdatenverarbeitungseinrichtung erstellten gebührenbezogenen Verbindungsdaten ein Nachweis über die Berechtigung des betreffenden Benutzers vorausgesetzt ist.

7. Verfahren nach einem der vorhergehenden Ansprüche, **dadurch gekennzeichnet,** daß unter der Voraussetzung, daß die Ursprungsdatenverarbeitungseinrichtung (DV-L) zur Nutzung von Rechennetzwerkverbindungen (Internet-Verbindungen) einen Browser und ein Anzeigedisplay (Bildschirm) aufweist, die Darstellung der gebührenbezogenen Verbindungsdaten lokal mit den gleichen vorhandenen Modulen und den gleichen Eingabebefehlen des Benutzers unmittelbar darstellbar sind.
